# EUROPEAN PATENT APPLICATION

(11) **EP 3 351 724 A1**
(43) Date of publication of application: **25.07.2018**
(21) Application number: 15904207.6
(22) Date of filing: 18.09.2015
(51) Int. Cl.: F01D 1/14, F01D 9/06, F01D 17/08, F01D 17/14

(54) **METHOD OF CONVERTING THE ENERGY OF A GASEOUS WORKING FLUID AND APPARATUS FOR THE IMPLEMENTATION THEREOF**

(71) Applicant: Obshchestvo S Ogranichennoj Otvetstvennostyu "Turboenerdzhi", Moscow 143026 (RU)
(72) Inventor: LEVKOV, Kirill Leonidovich, Minsk 220100 (BY); LEVKOV, Leonid Fedorovich, Minsk 220100 (BY); NOVIKOV, Alesandr Leonidovich, Minsk 220028 (BY)
(74) Representative: Chimini, Francesco
(86) International application number: PCT/RU2015/000588
(87) International publication number: WO 2017/048149

(57) **Abstract**

The invention relates to the energy sector. A device for converting the energy of a drop in the pressure of a gaseous working fluid comprises a housing, a consumer of the mechanical energy generated, and an expansion turbine with a bladed impeller. A turbine housing includes nozzle passages and return guide passages, gas ducts, connecting pipes for the supply and removal of a heat transfer medium, and connecting pipes for the supply and removal of a working fluid. The return guide passages are situated around the circumference of the impeller with an angular offset along the direction of rotation of the impeller and are interconnected by the gas ducts, forming successive expansion stages. The gas ducts are in the form of bent pipes and are disposed inside the housing of the device, forming a heat exchanger. The repeated expansion of the working fluid is carried out successively on a single impeller with an outlet flow rate from the nozzle channels of each stage within a Mach number range of 0.3-0.5 and with an optimal blade speed to available heat drop ratio of 0.5 in each expansion stage, with different degrees of pressure drop at each expansion stage. The technical result is more efficient energy conversion.

## Description

### Field of the Invention

The subject group of inventions relates to the energy sector, including apparatuses and methods of utilizing the energy of the excess pressure of a gaseous working fluid in a turbine-driven generator, namely, of converting the energy of the excess pressure of a gaseous working fluid to mechanical/electrical energy.

### The Related Art

The prior art discloses the following high-power (1 to 10 MW) turbine-generator sets: Turbogaz (http://www.turbogaz.com.ua/equipment/turbodetandr/utdu.html), Cryocor (http://www.cryocor.ru/index.php?option=com_content&view=article&id=23&Itemid=67), Atlas Copco (http://www.atlascopco-gap.com/products/expanders/), CryoStar (http://www.cryostar.com/web/turboexpanders.php) and GE (http://site.ge-energy.com/businesses/ge_oilandgas/en/literature/en/downloads/turbo_generators.pdf). These turbine-generator sets are only capable of operating at high drops in the pressure and flow rates of a gaseous working fluid. This substantially confines the scope of their use, especially when applied to utilize secondary (tail) energy resources in industry, gas pipeline systems, housing and utilities sector etc. For example, these turbine-generator sets can only be used in gas supply systems of heavy facilities, which are characterized by a high (about hundred thousand to million cubic meters per hour) continuous gas consumption. The number of these facilities is restricted to large cities, high-power thermal plants and large factories.

The expansion of the scope of facilities that admit the utilization of the energy of the excess pressure of a gaseous working fluid requires the use of low-power turbine-generator sets, which are capable of operating at low flow rates and drops in the pressure, including turbine-generator sets designed for use at gas distributing plants (GDPs), as well as gas control units and plants (GCUs and GCPs), with low gas flow rates. These turbine-generator sets are produced by a few companies from the USA, Germany, Czech Republic, Russia and Ukraine.

Trends in low-power turbine-generator sets vary from country to country. For example, the companies from the USA and Germany develop and produce high-speed (up to 100,000 rpm) single-stage combined-flow turbines, which employ gas-dynamic or electrodynamic bearings and are coupled with high-frequency generators (RMG Messtechnik GmbH and other companies). In Russia and Ukraine, low-speed (up to 3,000 rpm) single-stage axial-flow turbines coupled with commercial generators are predominantly used. In addition, high-speed turbine-generator sets have been developed to utilize the energy of the excess pressure of natural gas, such as MTT (http://stc-mtt.ru/mikroturbodetandernyj-generator-elektricheskoj-moshhnostyu-20-kvt-mdg-20) and Turbokholod (http://www.turbokholod.ru/content/c10-page1.html).

Alternative methods of converting the energy of the excess pressure of a gaseous working fluid to electric energy are the use of jet ("Ukrneftezapchast" LLC, http://nnhpe.spbstu.ru/wp-content/uploads/2015/02/88_tda-SRT.pdf) and screw-type (Langson, http://www.langsonenergy.com/products/turbo-expanders-gas) machines, as well as other types of plants.

However, the gas is still heated by burning a portion of the gas or another high-temperature source. In addition, problems of the stable control over changes in the pressure and natural gas flow rate, as well as the reliability and durability of the plants, remain unsolved.

The prior art discloses the expander-generator plant (ref. to http://www.turbogaz.com.ua/eng/equipment/turbodetandr/dgu.html). This plant doesn't include any natural gas heater, which allows it to operate either without gas heating or using an auxiliary heater with high-temperature fluid, which requires the burning of the gas to be employed. The plant is based on the single-stage design, which makes it impossible to implement control under changes in the pressure and flow rate of the gas. Since the available heat drop becomes exhausted at a single stage, this plant is only capable of operating in a narrow load range. An advantage of the plant is the simple design, while among its disadvantages are the low efficiency (30%) and the restricted scope of facilities for which the plant is applicable. A few facilities are known at which these plants have been employed. However, the DGU-8 expander-generator plant is designed for higher original pressures of the gas; therefore, it is applicable for GDPs. The performance potential of these expander-generator plants substantially exceeds their power of 8 kW.

The prior art also discloses the Gascontrol plant (http://www.gascontrol.cz/en/produkty/expanzni-turbina.html). The said plant doesn't include any natural gas heating as well; therefore, it operates either without gas heating or using an auxiliary heater with a high-temperature fluid, which requires the burning of the gas to be employed. The plant is based on the single-stage design, which doesn't allow for adjustment to changes of pressure and flow rate of gas. Since the available heat drop becomes exhausted at a single stage, this plant is only capable of operating in a narrow load range. The low output power of the plant confines the scope of its use and prolongs its payback time. The operation in the narrow power range restricts the scope of facilities for which the plant is applicable. The said plant can only be used at GDPs, which substantially restricts the scope of targeted facilities.

The prior art also discloses the MDG-20 micro-turbo-expander-generator plant (ref. to http://stc-mtt.ru/mikroturbodetandernyj-generator-elektricheskoj-moshhnostyu-20-kvt-mdg-20). This plant doesn't include any natural gas heater; therefore, it operates either without gas heating or using an auxiliary heater with a high-temperature fluid, which requires the burning of the gas to be employed. The plant was developed to be an auxiliary power supply for GDPs. It is based on the simplest single-stage design. Plant control is implemented by varying the rotor speed. The plant employs a high-speed generator and gas bearings. The use of this solution makes the plant design more complex and expensive. The scope of facilities for which the plant is applicable is restricted because of the necessity to create a high original pressure and a constant flow rate of the gas. The manufacturer focuses its attention on developing machines merely for GDPs; therefore, only about 10% of targeted facilities are used to install the turbo-expander-generator plants. Since the plant is of the special purpose (it is only applicable as an auxiliary power supply for GDPs), the scope of its use is confined, notwithstanding that these plants have a substantially higher performance potential. A similar situation has arisen for the plants manufactured by another Russian company (Turbokholod JSC, see above).

The prior art also discloses the TDA-SRT-55 turbo-expander-generator plant (ref. to http://ukrnz.com.ua/). The known plant employs an auxiliary working gas heater with a high-temperature fluid, which requires the burning of the gas to be used. The plant is based on the single-stage design including a bleed-gas turbine, which makes it impossible to implement control under changes in the pressure and flow rate of the gas. A simpler design of the plant implies the use of a jet turbine instead of the blade one, which makes it cheaper, but impairs its energy performance.

The prior art also discloses the MTG 160 turbo-expander-generator plant (ref. to https://www.honeywellprocess.com/library/marketing/tech-specs/MTG_rus_0702.pdf). The known plant includes no natural gas heating; therefore, it operates either without gas heating or using an auxiliary heater with a high-temperature fluid, which requires the burning of the gas to be employed. The plant is based on the single-stage design, which includes a high-speed radial-flow impeller. Plant control is implemented by varying the rotor speed. The plant is coupled with a high-speed generator.

The prior art also discloses the apparatus for the use of the energy of a drop in the pressure of a gaseous working fluid and the method of using the energy of a drop in the pressure of a gaseous working fluid (ref. to Belarus patent BY 10032 C1, F17D 1/00, publ. 30.12.2007). The apparatus for the use of the energy of a drop in the pressure of a gaseous working fluid comprises the following units:
- an expansion turbomachine that consists of an enclosure and a bladed impeller installed on a shaft in the enclosure. The shaft is coupled with a power-takeoff shaft;
- connecting pipes for the supply of the gaseous working fluid with nozzle blocks used to supply the gaseous working fluid to the impeller blades and connecting pipes for the removal of the gaseous working fluid;
- a housing equipped with connecting pipes for the supply and removal of the heat transfer medium and with the expansion turbomachine in it;
- helical passages that form a heat exchanger and are disposed between the housing and the enclosure. Every half-turn of the helical passages is disposed on both sides of the impeller and one of the ends of the helical passages is equipped with a nozzle block.

A drawback of the known apparatus is a high hydraulic resistance of the gas circuit passages, which reduces the drop in the pressure necessary to do effective work in the form of mechanical or electrical energy. Another drawback is the non-optimal outlet profile of the impeller blades because of the requirements for their symmetry. In addition, losses occur due to the forcing out of the flow in the turbine stages resulted from changes in the flow direction.

The above-mentioned patent BY 10032 C1 also discloses the method of using the energy of a drop in the pressure of a gaseous working fluid, which involves the repeated expansion of a gaseous working fluid accompanied by reducing its pressure and temperature and the takeoff of the mechanical energy generated. Every act of expansion of the gaseous working fluid is followed by its forced heating or cooling by a heat transfer medium in a heat exchanger disposed directly in the apparatus housing.

The drawbacks of the known method are the difficulty of creating a sufficient heat transfer surface provided that hydraulic losses for the flow of the gaseous working fluid remain minimal and need for ensuring an optimal ratio U/C_{ad} at every stage of the expansion of the gaseous working fluid.

### Summary of the Invention

The technical problem that can be solved by using the subject group of inventions is creating a method and a device that allow one to utilize effectively, economically and reliably the energy of the excess pressure of a gaseous working fluid, namely, to convert the energy of the excess pressure of a gaseous working fluid to mechanical/electrical energy.

The technical result of the subject invention is higher efficiency and reliability of the subject apparatus, a higher efficiency of the method of using the energy of a drop in the pressure of the gaseous working fluid and reducing the pressure of the gaseous working fluid to a few consumer grades.

The technical result of the subject invention is achieved by means of the use of the apparatus for the conversion of the energy of a drop in the pressure of a gaseous working fluid, which comprises an enclosure and a consumer of the mechanical energy generated and an expansion turbine with a bladed impeller, which are installed in the enclosure, with a turbine housing that includes nozzle passages and return gas passages, gas ducts, connecting pipes for the supply and removal of a heat transfer medium, connecting pipes for the supply of the gaseous working fluid to the impeller and connecting pipes for the removal of the gaseous working fluid, and with the impeller installed on the shaft coupled with the shaft of the consumer of the mechanical energy generated, wherein
the return gas passages are situated around the circumference of the impeller with an angular offset along the direction of rotation of the impeller and are interconnected by the gas ducts forming successive stages of the expansion of the gaseous working fluid, wherein the inlet of every gas duct is connected to a return gas passage and its outlet is connected to a nozzle passage, wherein the gas ducts are in the form of bent pipes and are disposed inside the enclosure of the apparatus forming a heat exchanger.

In a particular embodiment of the subject invention, the gas ducts are additionally equipped with enhancers in the form of finning, which favor the expansion of the area of the heat transfer surface and the turbulization of flows of the heat transfer media.

In a particular embodiment of the subject invention, the expansion turbine is implemented as a single radial-flow impeller.

In a particular embodiment of the subject invention, a control device is installed at the inlet of the nozzle passages to control the pressure at the outlet of the last expansion stage of the nozzle passages.

The technical result of the subject invention is achieved by means of the use of the energy of a drop in the pressure of a gaseous working fluid in the apparatus for the conversion of the energy of a drop in the pressure of a gaseous working fluid, which comprises an enclosure and a consumer of the mechanical energy generated and an expansion turbine with a bladed impeller, which are installed in the enclosure, with a turbine housing that includes nozzle passages and return gas passages, gas ducts, connecting pipes for the supply and removal of a heat transfer medium, connecting pipes for the supply of the gaseous working fluid to the impeller and connecting pipes for the removal of the gaseous working fluid, and with the impeller installed on the shaft coupled with the shaft of the consumer of the mechanical energy generated, wherein the return gas passages are situated around the circumference of the impeller with an angular offset along the direction of rotation of the impeller and are interconnected by the gas ducts forming successive stages of the expansion of the gaseous working fluid, wherein the inlet of every gas duct is connected to a return gas passage and its outlet is connected to a nozzle passage, wherein the gas ducts are in the form of bent pipes and are disposed inside the enclosure of the apparatus forming a heat exchanger, including the repeated expansion of the gaseous working fluid, the takeoff of the mechanical energy generated, as well as the heating or cooling of the working fluid by the heat transfer medium in the heat exchanger after every act of expansion, wherein
the repeated expansion of the working fluid is carried out successively on a single impeller with a flow rate of the gaseous working fluid at the outlet of the nozzle passages of each stage within a Mach number range of 0.3-0.5 and with an optimal ratio U/C_{ad} = 0.5 in each expansion stage with equal degrees of the pressure drop synchronously with the heat drop at each stage of the expansion of the gaseous working fluid.

### Brief Description of the Drawings

Specialties, features and advantages of the subject group of technical solutions appear from the following description of the embodiments of the claimed method and apparatus using the drawings that show the following:
Fig. 1 - the processes of the expansion of ideal gas (1-2a, 1-2 and 1-a-b-c-d-e-2 are the adiabatic, isothermal and multistage processes, respectively);
Fig. 2 - the i-s diagram for methane (I - single-stage expansion followed by heating, II - single-stage heating accompanied by expansion and III - multistage expansion accompanied by interstage heating);
Fig. 3 - the schematic structural diagram of the apparatus;
Fig. 4 - the gas duct layout.

The positions in the figures specify the following components:
*1* - *forepart of split outer enclosure; 2* - *counterpart of split outer enclosure; 3* - *impeller; 4* - *nozzle passages and return guide passages; 5* - *gas ducts; 6* - *connecting pipe for supply of gaseous working fluid; 7* - *connecting pipe for removal of gaseous working fluid; 8* - *connecting pipe for supply of heat transfer medium; 9* - *connecting pipe for removal of heat transfer medium; 10* - *generator; 11* - *cable gland; 12* - *enhancers; 13* - *control device; 14* - *expansion turbine housing.*

### Disclosure of the Invention

The claimed apparatus comprises a turbine, which implements the expansion of a gaseous working fluid, a heat exchanger, which implements the supply of heat energy to the gaseous working fluid, and a generator, which converts the mechanical energy of the rotation of the turbine impeller to electric energy. These structural components of the claimed apparatus are joined into an integrated structure using a sealed enclosure. The application of the claimed apparatus makes it possible to use efficiently low-grade tail energy resources for generating electrical energy without consuming fuels.

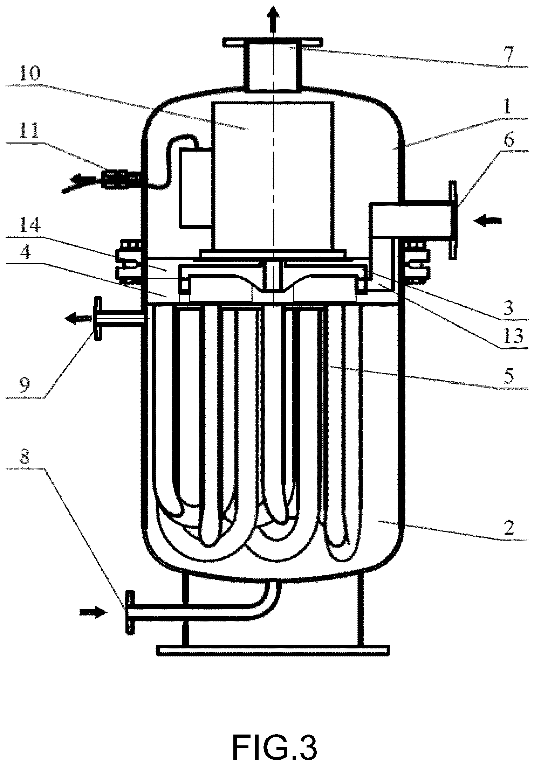

In more detail, the claimed apparatus (Fig. 3) comprises a split outer enclosure, which consists of fore part (1) and counterpart (2), a turbine unit, which consists of expansion turbine housing (14) and single bladed radial-flow impeller (3) installed in the housing, nozzle passages and return guide passages (4), which are situated around the circumference of impeller (3) with an angular offset along the direction of rotation of the impeller and are interconnected by gas ducts (5), which form a heat exchange surface (a heat exchanger), and generator (10), which is installed inside the apparatus enclosure. The apparatus enclosure is equipped with connecting pipe for the supply of a gaseous working fluid (6) and connecting pipe for the removal of the gaseous working fluid (7), as well as with connecting pipe for the supply of the heat transfer medium (8) and connecting pipe for the removal of the heat transfer medium (9).

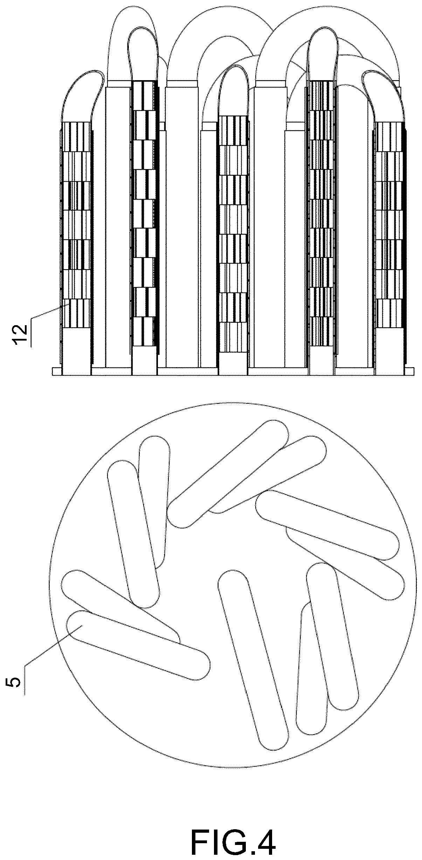

Gas ducts (5) are formed by rows of bent pipes, which are disposed inside one of the parts of the enclosure and form a heat exchanger together with this part of the enclosure (Fig. 4).

Gas ducts (5) can be additionally equipped with enhancers (12) in the form of finning, which improve the efficiency of heat transfer, wherein gas ducts (5) together with nozzle passages and return guide passages (4) form stages of the expansion of the gaseous working fluid. The nozzle passages are installed at the outlet of every gas duct (5) and the inlet of every gas duct (5) is connected to a return guide passage.

Nozzle passages and return guide passages (4) of gas ducts (5) are situated around the circumference of impeller (3). This makes it possible to implement the multistage expansion of the gaseous working fluid on single impeller (3) during its successive passage from one sector of impeller (3) to the other.

The number of expansion stages can be increased up to thirty.

Impeller (3) is directly coupled to the rotor of generator (10) by installing impeller (3) on the shaft of generator (10).

Generator (10) is installed inside the apparatus.

Parts (1) and (2) of the apparatus enclosure are hermetically joined, which is especially important when using explosive and flammable gases. The enclosure is equipped with explosion-proof sealing gland (11) to connect cables from generator (10).

Control device (13) is installed at the inlet of the nozzle passages to stabilize the outlet pressure of the gaseous working fluid and to maintain it at a required level when the flow rate of the gaseous working fluid varies. The control is implemented by means of the pressure at the outlet of the last expansion stage.

Tip leakage losses caused by the leakage of the gaseous working fluid from the highpressure zones to the low-pressure zones, i.e., from a stage of the expansion of the gaseous working fluid to the next one, are reduced by using gland packings. The gland packings are in the form of coaxial ridges and are installed on the hub of impeller (3) and on expansion turbine housing (14).

The flow of the gaseous working fluid is supplied to the apparatus through connecting pipe (6) and control device (13), passes nozzle passages (4) of the first stage of the expansion of the gaseous working fluid and the blades of impeller (3) and then is supplied to gas duct (5) through which it is supplied to nozzle passage (4) of the second stage. After passing nozzle passage (4) of the second stage, the flow is supplied to the blades of impeller (3) of the third stage through gas duct (5) and, finally, after passing successively a number of stages through the gas ducts, the flow is removed from the turbine-generator set through connecting pipe (7) at a required exhaust pressure.

Thus, the multistage reduction in the pressure of the flow of the gaseous working fluid is implemented on the blades of single impeller (3) due to the partial supply of the gaseous working fluid.

In the apparatus, the supply of heat to the gaseous working fluid is implemented between the expansion stages. The gas flows in gas ducts (5) and the heat transfer medium is supplied from connecting pipe (8) to part (2) of the enclosure, flows around gas ducts (5) and heats the gaseous working fluid. The cooled heat transfer medium is removed through connecting pipe (9).

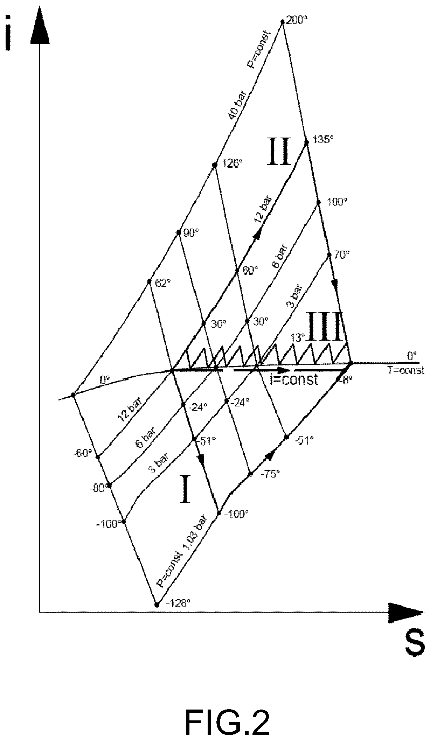

After passing the last expansion stage, the gaseous working fluid is supplied to the cavity of part (1) of the apparatus enclosure through the passages in expansion turbine housing (14) and is additionally heated due to the removal of heat from the housing of generator (10). In order to provide the cooling of generator (10) and to increase the temperature of the gaseous working fluid, most heat is transferred from generator (10) to the gaseous working fluid. During the repeated heating of the gas between the expansion stages, the thermodynamic process of the expansion of the gas at the constant temperature is practically implemented (Fig. 2). According to the theory of thermodynamics, during the isothermal process all heat transferred from the heat transfer medium to the gaseous working fluid is consumed for doing external mechanical work.

In this case, the efficient use of the flow of the gaseous working fluid under excess pressure and the low-grade heat flow for gas heating is achieved.

The multistage partial supply of the gaseous working fluid accompanied by its interstage heating by the low-grade heat flow to the single low-speed impeller coupled with the rotor of the generator installed inside the apparatus enclosure makes it possible to utilize efficiently low-grade flows of the gaseous working fluid (flows with low rates and drops in pressure), thus providing the following:
reduced leakages of the gaseous working fluid due to maintaining the ratio h/b of no less than 1, which increases the blade efficiency of the apparatus and the blade aspect ratio;
low rates of flows of the gaseous working fluid (the Mach number is 0.3-0.5) and a low speed of the impeller (up to 3,500 rpm), which improves the reliability of the apparatus and makes its design simpler due to the use of commercial generators and bearing units, while maintaining the optimal ratio U/C_{ad} = 0.5 and the possibility of ensuring required interstage heating (1 kW of heat shall be supplied per 1 kW of generated electrical energy);
the single-enclosure configuration of the apparatus, which ensures the efficient cooling of the generator using the excess heat energy (10-20% of the electrical power of the generator) to heat the gaseous working fluid, substantially simplifies power takeoff from the apparatus to the external consumer and improves the reliability of the generator.

The claimed method of converting the energy of a gaseous working fluid, which involves the repeated expansion of the gaseous working fluid accompanied by reducing its pressure and temperature, the takeoff of the mechanical energy generated, as well as the repeated heating or cooling of the gaseous working fluid by the heat transfer medium in the heat exchanger after every act of expansion, characterized in that
multistage expansion is carried out successively with a flow rate of the gaseous working fluid at the outlet of the nozzle passages of each stage within a Mach number range of 0.3-0.5 and with an optimal ratio U/C_{ad} = 0.5 in each expansion stage.

Pressure reduction is implemented with equal degrees of the pressure drop and the exhausted heat drop at each stage of the expansion of the gaseous working fluid.

When the flow rate of the gaseous working fluid varies, the outlet pressure of the gaseous working fluid is stabilized and maintained at the required level in the control device installed at the inlet of the nozzle passages. The control is implemented by means of the pressure at the outlet of the last expansion stage;
the repeated expansion of the gaseous working fluid is employed, the forced heating or cooling of the gaseous working fluid by the heat transfer medium in the heat exchanger installed directly inside the apparatus enclosure are implemented, as well as power takeoff is used, wherein
the repeated (multistage) expansion of the gaseous working fluid is carried out on a single impeller with an optimal blade speed to available heat drop ratio (U/C_{ad}) in each expansion stage and is accompanied by the repeated (multistage) heating or cooling of the gaseous working fluid.
- The multistage expansion of the gaseous working fluid is carried out on single impeller (3) by supplying it through nozzle passages (4) situated around the circumference of impeller (3) and is accompanied by the interstage heating of the gaseous working fluid in the passages that connect the outlet of the previous expansion stage to the passage of the next expansion stage.
- Heat is supplied to the gaseous working fluid from the low-grade foreign heat transfer medium before expansion on the impeller and/or before every expansion stage, as well as by removing the heat from the generator and transferring it to the gaseous working fluid.
- The internal recovery process can be implemented employing the transfer of the heat of the gaseous working fluid that flows in the gas ducts to the gaseous working fluid that occupies the space between the gas ducts. This makes it possible to implement the more efficient cooling of the expanded gaseous working fluid by the cold gaseous working fluid itself.
- The thermodynamic process of the expansion of the gaseous working fluid accompanied by its heating before every expansion stage approaches the isothermal process.
- The thermodynamic process of the expansion of the gaseous working fluid accompanied by its cooling after every expansion stage approaches the isoentropic (ideal adiabatic) process.
- Any gas under excess pressure, such as natural gas, water vapor etc., can be used as the working fluid and any waste heat carried by, e.g., process hot water, water vapor or condensate, flue gases, hot air and vehicle exhaust gases, as well as heat emitted by transformers or any other devices etc., can be used as the heat transfer medium. In this case the power plant shall be incorporated into a closed-circuit plant, in particular, a Rankine cycle plant, which employs a working fluid with a low boiling point, such as butane, pentane etc., or a Brayton cycle plant in which flue gases, air etc. serve as the working fluid.

Pressure reduction is implemented with equal degrees of the pressure drop and the exhausted heat drop at each stage of the expansion of the gaseous working fluid.

When the flow rate of the gaseous working fluid varies, the outlet pressure of the gaseous working fluid is stabilized and maintained at the required level in the control device installed at the inlet of the nozzle passages. The control is implemented by means of the pressure at the outlet of the last expansion stage.

The conversion of the energy of the compressed gas to the work during adiabatic expansion results in the decrease in the temperature of the gas by about 10°C per the increment of the drop in the pressure of 0.1 MPa. For example, at a low temperature concentrations of certain components of the mixture known as natural gas in the gas flow change, and the surplus amount of these components is liberated into the flow in another aggregate state. When the gas becomes cooled to a temperature below the dew point temperature, the surplus amount of moisture is liberated in the liquid or solid phase. In accordance with the equilibrium isotherm, heavy hydrocarbons, e.g., propane-butane fractions, are partly transformed to the liquid state. This results in the formation of a snow-like mixture, which has a negative effect on the wheelspace due to an increase in the permanent losses caused by changes in the geometric characteristics of the vane unit and also to a decrease in the reliability of the apparatus because of the possibility of the accelerated fracture of the blades. Moreover, the rated temperature of natural gas supplied to consumers shall not be below +5°C. Therefore, the gas shall be heated before or after passing a turbine-generator set, as mentioned above. In common recovery turbine-generator sets, the gas either is not heated, which is related to a low heat drop exhausted in these plants, or is heated by water with a temperature of 70-130°C. The heating of natural gas depends, in turn, on the exhausted heat drop and the initial temperature of the gas flow. In the latter case, there might be problems in providing the plant with the required heat transfer medium.

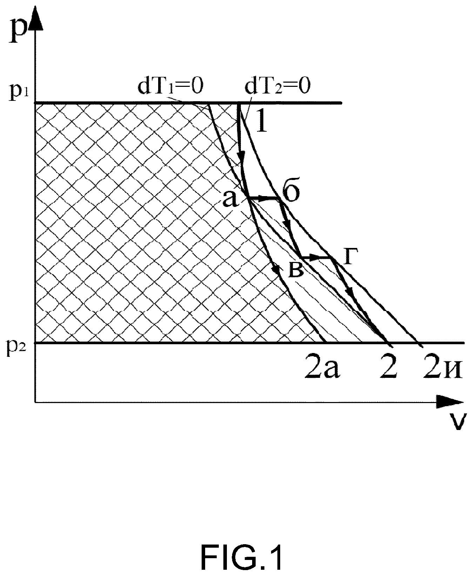

Figure 1 illustrates various expansion processes in p-V coordinates where the technical work is shown by the shaded area. It is obvious that in the case of multistage expansion the process approaches the isothermal process, which is characterized by the highest process work, while the degree of approximation depends on the number of stages.

The heat drop exhausted at every stage decreases proportionally to the number of expansion stages and, therefore, the heat of the process of the heating of the flow before the next expansion stage also decreases (Fig. 2). Finally, in the limiting case it is possible to use circulation water from cooling systems and other flows the utilization of which is attractive, but difficult to implement because of their low temperature potential, as the heating medium.

In conditions of a low cost of energy sources, cheap and reliable machines, i.e., pressure controllers are used, which are based on the throttling process and characterized by corresponding exergy losses. It is commonly believed with sufficient accuracy that the enthalpies of the initial and final points of the throttling process are equal, but the course of the irreversible process is unknown and shown in the i-s diagram by the dashed line i = const.

The work of the adiabatic process is shown in the i-s diagram by the i-intercept, and in the case of the multistage expansion of the flow, which includes the sequence of adiabatic and isobaric processes, this work is determined by the sum of the heat drops exhausted at all stages.

Variant I of the implementation of the same sequence of processes admits the use of heat transfer media with fairly low temperatures, but it is characterized by a lower work.

Variant II of the implementation of the above-mentioned sequence of expansion processes is characterized by the highest work, which is related to an increase in the initial temperature. However, the implementation of this variant requires a high-grade heat transfer medium to be used.

To solve the problem of eliminating the drawbacks appropriate for both variants, it is advisable to consider a possibility of using the multistage expansion of the gas flow accompanied by interstage heating after every stage (variant III), which approaches this process to the isothermal process and increases the removed work, as known. In this case, the heat drop exhausted at every stage and the heat of the process of the recovery of the temperature of the gas flow to its initial value after expansion in every stage decrease proportionally to the number of expansion stages, which makes it possible to use a low-temperature heat transfer medium, e.g., circulation water etc., to heat the working fluid.

The gaseous working fluid is supplied to the apparatus through the gas inlet pipe, passes through the nozzles of the first stage and the blades of the impeller and is supplied to the gas ducts through which it is supplied to the nozzles of the second stage. After passing the nozzles of the second stage, the gaseous working fluid is again supplied to the blades of the impeller of the third stage through the nozzles and, finally, after passing successively a number of stages through the gas ducts, it is removed from the turbine-generator set through the gas outlet pipe at a required exhaust pressure.

The multistage reduction in the pressure of the gaseous working fluid is implemented on the blades of a single impeller due to the repeated partial return of the gaseous working fluid on the impeller. The number of expansion stages can be increased up to thirty.

In the claimed apparatus, heat is supplied to the gaseous working fluid before expansion and/or before every expansion stage.

The gaseous working fluid flows in the gas ducts, while the liquid or gaseous heat transfer medium is supplied to the space between the gas ducts from the pipes, flows around the gas ducts and transfers the heat to the gaseous working fluid, after which the heat transfer medium is removed from the claimed apparatus through the pipes. The claimed apparatus is different from the known turbine-generator sets in that the turbine, heat exchanger and generator are integrated into a single unit. The multistage expansion of the flow is implemented on a single impeller during its successive passage from one sector of the impeller to the other.

The flow is heated repeatedly in accordance with the number of expansion stages during its passage from one sector of the impeller to the other. The gas ducts are formed by rows of bent pipes of the corresponding diameter and the heating medium flows in the interpipe space.

The claimed apparatus can use any gas in both ideal-gas and vapor region. Any low-temperature heat transfer medium can be used as the heating medium. Pressures and temperatures of both flows being utilized can be different.

When rates and parameters of the inlet and outlet flows of natural gas vary, control over the claimed apparatus is implemented.

The natural gas is heated in the integrated heat exchanger using a low-temperature (no higher than 30°C) heat transfer medium, e.g., water, waste heat etc. The heating is implemented stepwise, i.e., after passing every expansion stage. This eases demands for the temperature potential of the heating medium. This feature is also an innovation.

The claimed apparatus requires no fuel for operation and its operation does not employ the burning of fuel to heat the gas. Only a portion of the already consumed (secondary) energy is used for this purpose. Therefore, the apparatus is environmentally friendly.

Unlike the known low-power turbine-generator sets, the claimed apparatus is a low-speed apparatus. This makes it possible to simplify its design, reduce its cost and prolong its service life.

The small dimensions and versatility (no auxiliary equipment is needed) of the apparatus make it applicable for installation in GDP and GCU buildings or in annexes to these buildings with the minimum scope of auxiliary valves.

When using explosive and flammable gases, a high air tightness class shall be ensured due to the application of magnetically-combined turbine and generator.

## Claims

1. An apparatus for the conversion of the energy of a drop in the pressure of a gaseous working fluid, which comprises an enclosure and a consumer of the mechanical energy generated and an expansion turbine with a bladed impeller, which are installed in the enclosure, with a turbine housing that includes nozzle passages and return gas passages, gas ducts, connecting pipes for the supply and removal of a heat transfer medium, connecting pipes for the supply of the gaseous working fluid to the impeller and connecting pipes for the removal of the gaseous working fluid, and with the impeller installed on the shaft coupled with the shaft of the consumer of the mechanical energy generated, **characterized in that**
the return gas passages are situated around the circumference of the impeller with an angular offset along the direction of rotation of the impeller and are interconnected by the gas ducts forming successive stages of the expansion of the gaseous working fluid, wherein the inlet of every gas duct is connected to a return gas passage and its outlet is connected to a nozzle passage, wherein the gas ducts are in the form of bent pipes and are disposed inside the enclosure of the apparatus forming a heat exchanger.

2. The apparatus according to Claim 1 wherein the gas ducts are additionally equipped with enhancers in the form of finning, which favor the expansion of the area of the heat transfer surface and the turbulization of flows of the heat transfer media.

3. The apparatus according to Claim 1 wherein the expansion turbine is implemented as a single radial-flow impeller.

4. The apparatus according to Claim 1 wherein a control device is installed at the inlet of the nozzle passages to control the pressure at the outlet of the last expansion stage of the nozzle passages.

5. The method of using the energy of a drop in the pressure of a gaseous working fluid being embodied in the Apparatus of Claims 1-4, which involves the repeated expansion of the gaseous working fluid and the takeoff of the mechanical energy generated, as well as the heating or cooling of the gaseous working fluid by a heat transfer medium in a heat exchanger after every act of expansion, **characterized in that**
the repeated expansion of the gaseous working fluid is carried out successively on the single impeller with a flow rate of the gaseous working fluid at the outlet of the nozzle passages of each stage within a Mach number range of 0.3-0.5 and with an optimal ratio U/C_{ad} = 0.5 in each expansion stage with equal degrees of the pressure drop synchronously with the heat drop at each stage of the expansion of the gaseous working fluid.
